# EUROPÄISCHE PATENTSCHRIFT

(11) **EP 1 474 247 B1**
(45) Veröffentlichungstag und Bekanntmachung des Hinweises auf die Patenterteilung: **24.03.2010**
(21) Anmeldenummer: 03702578.0
(22) Anmeldetag: 31.01.2003
(51) Int. Cl.: B05D 7/00, B05D 7/16

(54) **VERFAHREN ZUR HERSTELLUNG FARB- UND/ODER EFFEKTGEBENDER MEHRSCHICHTLACKIERUNGEN**
METHOD FOR PRODUCING CHROMOPHORIC AND/OR EFFECT-PRODUCING MULTILAYER COATINGS
PROCEDE DE PRODUCTION DE REVETEMENTS MULTICOUCHES COLORES ET/OU A EFFETS

(30) Priorität: 15.02.2002 DE 10206225
(43) Veröffentlichungstag der Anmeldung: 10.11.2004
(73) Patentinhaber: BASF Coatings AG, 48165 Münster (DE)
(72) Erfinder: BAUMGART, Hubert, 48163 Münster (DE); KUSSEL, Daniel, 48165 Münster (DE); LICHTE, Yvonne, 48165 Münster (DE)
(86) Internationale Anmeldenummer: PCT/EP2003/000967
(87) Internationale Veröffentlichungsnummer: WO 2003/068417

(56) Entgegenhaltungen:
- WO-A-00/68323

## Beschreibung

Die vorliegende Erfindung betrifft ein neues Verfahren zur Herstellung farb- und/oder effektgebender Mehrschichtlackierungen.

Farb- und/oder effektgebende Mehrschichtlackierungen und Verfahren zur ihrer Herstellung sind bekannt. Sie werden vor allem für die Lackierung von Kraftfahrzeugen, insbesondere Nutzfahrzeugen und Automobilen, verwendet. Der so genannte Automobilaufbau der farb- und/oder effektgebende Mehrschichtlackierungen, wie er in Römpp Lexikon Lacke und Druckfarben, Georg Thieme Verlag, Stuttgart, New York, 1998, Seite 50, »Automobil-Lackierung«, definiert wird, besteht im allgemeinen aus Elektrotauchlackierung, Primer, Füllerlackierung oder Steinschlagschutzgrundierung, Basislackierung und Klarlackierung.

Die Verwendung der farb- und/oder effektgebenden Mehrschichtlackierungen als Automobilaufbau setzt die so genannte Automobilqualität voraus. Gemäß dem europäischen Patent EP 0 352 298 B 1, Seite 15, Zeile 42, bis Seite 17, Zeile 14, bedeutet dies, dass die betreffenden farb- und/oder effektgebende Mehrschichtlackierungen
(1) einen hohen Glanz,
(2) eine hohe Abbildungsunterscheidbarkeit,
(3) ein hohes und gleichmäßiges Deckvermögen,
(4) eine einheitliche Trockenschichtdicke,
(5) eine hohe Benzinbeständigkeit,
(6) eine hohe Lösemittelbeständigkeit,
(7) eine hohe Säurebeständigkeit,
(8) eine hohe Härte,
(9) eine hohe Abriebfestigkeit,
(10) eine hohe Kratzfestigkeit,
(11) eine hohe Schlagfestigkeit,
(12) eine hohe Zwischenschichthaftung und Haftung auf dem Substrat und
(13) eine hohe Witterungsstabilität und UV-Beständigkeit
aufweisen müssen. Diese Voraussetzungen müssen nicht nur die farb- und/oder effektgebenden Mehrschichtlackierungen erfüllen, die sich auf den Kraftfahrzeugkarosserien befinden, sondern auch diejenigen, die sich auf Anbauteilen, wie Schutzbleche, Kotflügel, Türen, Kofferraumdeckel, Spoiler oder Reflektoren von Lampen, die nicht aus Metall, sondern aus Kunststoffen, insbesondere faserverstärkten Kunststoffen, SMC, (Sheet Molded Compounds) BMC (Bulk Moulded Compounds), IMC (Injection Moulded Compounds) und RIMC (Reaction Injection Moulded Compounds), hergestellt werden.

Bekanntermaßen werden die farb- und/oder effektgebenden Mehrschichtlackierungen hergestellt, indem man auf die elektrotauchlackierten Kraftfahrzeugkarosserien oder die Anbauteile einen Primer oder Füller appliziert, der in den allermeisten Fällen für sich selbst thermisch gehärtet wird. Auf die resultierende Füllerlackierung oder Steinschlagschutzgrundierung wird dann nach dem sogenannten Nass-in-nass-Verfahren ein Basislack und ein Klarlack aufgetragen, wonach man die resultierenden Schichten gemeinsam thermisch härtet. Dieses Verfahren weist den Nachteil auf, dass nur thermisch im besonders stabile Substrate hierdurch beschichtet werden können.

Um die Aushärtung zu beschleunigen und um auch thermisch labile Substrate beschichten zu können, hat man versucht die thermisch härtbaren Beschichtungsstoffe durch Beschichtungsstoffe zu ersetzen, die mit aktinischer Strahlung gehärtet werden können.

Hier im folgenden wird unter aktinischer Strahlung elektromagnetische Strahlung, wie nahes Infrarot (NIR), sichtbares Licht, UV-Strahlung und Röntgenstrahlung, insbesondere UV-Strahlung, und Korpuskularstrahlung, wie Elektronenstrahlung, verstanden.

Häufig lassen sich aber die pigmentierten Beschichtungsstoffe, wie Primer, Füller oder Steinschlagschutzgrundierungen und Basislacke wegen der Wechselwirkung der aktinischen Strahlung mit den Pigmenten nur schlecht aushärten. Bei den Klarlacken besteht dieses Problem bekanntermaßen nicht, es kann aber wegen der raschen Reaktionen und wegen der hohen Vernetzungsdichte zum Schrumpfen der resultierenden Klarlackierungen kommen. Nicht zuletzt lassen sich die Schattenzonen von komplexen dreidimensionalen Substrate nur dann optimal aushärten, wenn ein hoher apparativer Aufwand getrieben wird. Dabei müssen Hohlräume, Falzen und andere konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Um die Probleme, die mit der Verwendung von rein thermisch und rein mit aktinischer Strahlung härtbaren Beschichtungsstoffen einhergehen, zu lösen, sind bereits Beschichtungsstoffe, die thermisch und mit aktinischer Strahlung härtbar sind, eingesetzt worden. Diese so genannten Dual-Cure-Beschichtungsstoffe haben den Vorteil, dass eine ungenügende thermische Härtung der betreffenden Beschichtungen auf einem thermolabilen Substrat durch eine Härtung mit aktinischer Strahlung kompensiert werden kann. Andererseits kann eine ungenügende Strahlenhärtung in Schattenbereichen von komplexen dreidimensionalen Substraten durch die thermische Härtung kompensiert werden.

Von Nachteil ist aber, dass jede einzelne applizierte Schicht sowohl thermisch als auch mit aktinischer Strahlung gehärtet werden muss. Dies führt zu einer unerwünschten Verlängerung der Prozesszeiten und zu einer Erhöhung des Energieaufwands. Außerdem werden mehrere hintereinander geschaltete Dual-Cure-Härtungsstationen benötigt, was das Verfahren auch apparativ sowie regel- und messtechnisch aufwändig macht. Nicht zuletzt besteht die Gefahr, dass wegen der verlängerten Prozesszeiten vermehrt Staub einfällt, was die Qualität der resultierenden farb- und/oder effektgebenden Mehrschichtlackierungen verringert.

Häufig wird daher bei der Herstellung von farb- und/oder effektgebenden Mehrschichtlackierungen nur ein Dual-Cure-Beschichtungsstoff angewandt, um spezielle Probleme, die mit einer einzelnen Lackschicht oder Lackierung verbunden sind, zu lösen. Dabei handelt es sich häufig um Dual-Cure-Klarlacke.

So ist beispielsweise aus der internationalen Patentanmeldung WO 98/40170 ein Dual-Cure-Klarlack für ein Nass-in-nass-Verfahren bekannt, bei dem man eine Schicht aus einem Basislack mit einem Klarlack überschichtet, wonach man die resultierende Klarlackschicht vor dem gemeinsamen Einbrennen mit aktinischer Strahlung bestrahlt. Der Klarlack enthält, bezogen auf seinen Festkörper, 50 bis 98 Gew.-% aus einem thermisch durch Additions- und/oder Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und 2 bis 50 Gew.-% aus einem unter Einwirkung von aktinischer Strahlung durch radikalische Polymerisation olefinischer Doppelbindungen härtbaren System B).

Vorzugsweise enthält das System A) ein hydroxyfunktionelles Acrylatbindemittel einer Hydroxylzahl von 30 bis 300, bevorzugt 50 bis 250 mg KOH/g und einer zahlenmittleren Molmasse von 1.000 bis 10.000 Dalton und ein Vernetzungsmittel, bei dem es sich auch um ein Polyisocyanat handeln kann.

Das durch radikalische Polymerisation olefinischer Doppelbindungen härtbare System B) kann ein hexafunktionelles, aliphatisches Urethanacrylat eines theoretischen Molgewichts von 1.000 enthalten.

Aus der europäischen Patentanmeldung EP 0 928 800 A1 sind Dual-Cure-Klarlacke bekannt, die Isocyanatoacrylate und hydroxyfunktionelle Copolymere enthalten, die im wesentlichen aus (Meth)Acrylaten, Hydroxyalkyl(meth)acrylaten und gegebenenfalls Styrol und/oder anderen Monomeren, wie z. B. Acrylnitril, hergestellt werden. Vergleichbare Dual-Cure-Klarlacke, geht zusätzlich noch hydroxylgruppen- und/oder thiolgruppenhaltige Reaktiwerdünner enthalten, sind aus der internationalen Patentanmeldung WO 00/73395 bekannt.

Desweiteren sind aus der deutschen Patentanmeldung DE 199 20 799 A1 oder der internationalen Patentanmeldung WO 00/68323 Dual-Cure-Klarlacke bekannt, die
(a1) mindestens einen Bestandteil, beispielsweise ein Urethan(meth)acrylat, mit
   (a11) mindestens zwei funktionellen Gruppen, beispielsweise Acrylatgruppen, welche der Vernetzung mit aktinischer Strahlung dienen, und gegebenenfalls
   (a12) mindestens einer funktionellen Gruppe, beispielsweise Hydroxylgruppen, welche mit einer komplementären funktionellen Gruppe (a22) im Bestandteil (a2) thermische Vernetzungsreaktionen eingehen können,
   und
(a2) mindestens einen Bestandteil, beispielsweise ein Isocyanatoacrylat, mit
   (a21) mindestens zwei funktionellen Gruppen, beispielsweise Acrylatgruppen, welche der Vernetzung mit aktinischer Strahlung dienen, und
   (a22) mindestens einer funktionellen Gruppe, beispielsweise eine Isocyanatgruppe, welche mit einer komplementären funktionellen Gruppe (a12) im Bestandteil (a1) thermische Vernetzungsreaktionen eingehen kann,
   sowie gegebenenfalls
(a3) mindestens einen Photoinitiator,
(a4) mindestens einen Initiator der thermischen Vernetzung,
(a5) mindestens einen mit aktinischer Strahlung und/oder thermisch härtbaren Reaktiwerdünner,
(a6) mindestens ein Lackadditiv und/oder
(a7) mindestens einen thermisch härtbaren Bestandteil,
enthalten, mit der Maßgabe, daß der Beschichtungsstoff mindestens einen thermisch härtbaren Bestandteil (a7) enthält, wenn der Bestandteil (a1) keine funktionelle Gruppe (a12) aufweist.

Diese bekannten Dual-Cure-Klarlacke werden nass-in-nass auf Basislackschichten appliziert, wonach man die Klarlackschichten zunächst mit aktinischer Strahlung bestrahlt und sie anschließend gemeinsam mit den Basislackschichten thermisch zu härten. Durch dieses Verfahren werden aber die Probleme, die mit der Verwendung von thermisch härtbaren Beschichtungsstoffen bei der Herstellung von farb- und/oder effektgebenden Mehrschichtlackierungen in Automobilqualität verbunden sind, nicht in vollem Umfang gelöst.

Der Dual-Cure-Beschichtungsstoff der deutschen Patentanmeldung DE 199 20 799 A1 oder der internationalen Patentanmeldung WO 00/68323 kann aber auch als Dual-Cure-Primer verwendet werden. Ein integriertes Verfahren, bei dem der Dual-Cure-Beschichtungsstoff sowohl als Dual-Cure-Primer und als Dual-Cure-Klarlack verwendet wird, wird in den beiden Patentanmeldungen nicht beschrieben.

Sollen die vorstehend erwähnten Anbauteile für Kraftfahrzeugkarosserien auf der Basis von faserverstärkten Kunststoffen, wie SMC, (Sheet Molded Compounds) BMC (Bulk Moulded Compounds), IMC (Injection Moulded Compounds) und RIMC (Reaction Injection Moulded Compounds), in Automobilqualität beschichtet werden, treten weitere Probleme auf.

Diese Anbauteile sind an und für sich von hoher Temperaturbeständigkeit und ertragen Temperaturen von 190 bis 200 °C. Dabei weisen sie nur eine geringe Deformation auf. Außerdem lassen sich die komplexen Anbauteile mit dieser Technologie leichter und mit größerer Genauigkeit herstellen als mit verstärkten thermoplastischen Kunststoffen. Ein Nachteil ist jedoch, dass die Substrate an ihrer Oberfläche mikroporös sind und deshalb nicht direkt beschichtet werden können, weil es in der Beschichtung bei 70 bis 80 °C zur Bildung von Mikrobläschen (microbubbling, blistering) durch ausgasende Monomere, wie Styrol, kommt. Die Oberflächen müssen deshalb versiegelt werden, wofür der Dual-Cure-Primer der deutschen Patentanmeldung DE 199 20 799 A1 oder der internationalen Patentanmeldung WO 00/68323 sehr gut geeignet ist. Indes wird er vor der Applikation weiterer Lackschichten vollständig Dual-Cure-gehärtet, sodass das Versiegelungsverfahren die Probleme, die mit der Verwendung von Dual-Cure-Beschichtungsstoffen bei der Herstellung von farb- und/oder effektgebenden Mehrschichtlackierungen mit Automobilqualität einhergehen, nicht vollständig zu lösen vermag.

In der nicht vorveröffentlichten deutschen Patentanmeldung DE 101 13 884.9 wird ein Verfahren zur Beschichtung mikroporöser Oberflächen, wie sie in den vorstehend aufgeführten Anbauteilen vorliegen, beschrieben. Die mikroporösen Oberflächen enthalten Poren einer Weite von 10 bis 1.500 nm.

Bei diesem Verfahren wird die betreffende Oberfläche mit mindestens einem thermisch und mit aktinischer Strahlung härtbaren Beschichtungsstoff beschichtet, wonach man die resultierende(n) Schicht(en) thermisch und mit aktinischer Strahlung härtet, wobei der Beschichtungsstoff oder mindestens einer der Beschichtungsstoffe
(a1) mindestens einen Bestandteil mit
   (a11) im statistischen Mittel mindestens zwei funktionellen Gruppen pro Molekül, die mindestens eine mit aktinischer Strahlung aktivierbare Bindung enthalten, die der Vernetzung mit aktinischer Strahlung dient, und gegebenenfalls
   (a12) mindestens einer isocyanatreaktiven Gruppe,
(a2) mindestens einen thermisch härtbaren Bestandteil mit mindestens zwei isocyanatreaktiven Gruppen
   und
(a3) mindestens ein Polyisocyanat
enthält.

Bei dem beschriebenen Verfahren, können die mit dem Dual-Cure-Primer oder -Sealer beschichteten SMC und BMC nach der Trocknung und der Bestrahlung mit aktinischer Strahlung, vorzugsweise in nicht vollständig ausgehärtetem Zustand, sofort überlackiert werden.

Die Versiegelungen lassen sich mit allen üblichen und bekannten wäßrigen oder konventionellen, flüssigen oder festen wasserfreien und lösemittelfreien, physikalisch oder thermisch und/oder mit aktinischer Strahlung härtbaren Primern, Elektrotauchlacken, Füllern oder Steinschlagschutzgrundierungen, farb- und/oder effektgebenden Unidecklackierungen oder Basislackierungen sowie Klarlackierungen hervorragend überlackieren, wobei nicht expressis verbis angegeben wird, ob die Versiegelungen vollständig oder partiell Dual-Cure-gehärtet sind.

Aus dem Beispiel geht ein Verfahren hervor, bei dem der Dual-Cure-Primer oder -Sealer nach der Applikation abgelüftet und getrocknet und anschließend mit UV-Strahlung bestrahlt wird. Die resultierenden partiell gehärteten, elektrisch leitfähigen Versiegelungen konnten sofort mit handelsüblichen Primern oder Elektrotauchlacken überlackiert werden. Hiernach erfolgte eine vollständige Aushärtung. Die Beschichtung der Versiegelungen mit Basislacken und Klarlacken wird nicht beschrieben.

Aufgabe der vorliegenden Erfindung ist es, ein neues, integriertes Verfahren zur Herstellung von farb- und/oder effektgebenden Mehrschichtlackierungen bereitzustellen, das die Nachteil der Verfahren des Standes der Technik nicht mehr länger aufweist, sondern rasch, zuverlässig, kostengünstig, energiesparend und mit vergleichsweise geringem apparativen sowie mess- und regeltechnischem Aufwand farb- und/oder effektgebende Mehrschichtlackierungen in Automobilqualität liefert. Insgesamt soll das neue, integrierte Verfahren in der Linie mit weniger Beschichtungsstationen auskommen, als herkömmliche Verfahren.

Insbesondere soll das neue, integrierte Verfahren die Nachteile vermeiden, die mit der Verwendung von thermisch härtbaren Beschichtungsstoffen verbunden sind, und auch die Beschichtung thermisch labiler Substrate gestatten.

Außerdem soll das neue, integrierte Verfahren nicht die Nachteile aufweisen, die mit der Verwendung von Beschichtungsstoffen verbunden sind, die nur mit aktinischer Strahlung gehärtet werden können. So sollen auch pigmentierte Beschichtungsstoffe rasch ausgehärtet werden können, und bei der Härtung von Klarlacken soll es nicht mehr zum Schrumpfen der resultierenden Klarlackierungen kommen. Nicht zuletzt soll das neue, integrierte Verfahren die Anzahl der zusätzlichen beweglichen Bestrahlungseinrichtungen, wie sie üblicherweise bei der Beschichtung komplexer dreidimensionaler Substrate angewandt werden müssen, signifikant verringern, bzw. die beweglichen Bestrahlungseinrichtungen obsolet machen.

Des weiteren soll das neue, integrierte Verfahren auch die Nachteile vermeiden, die mit der Verwendung von Dual-Cure-Beschichtungsstoffen verbunden sind. Insbesondere soll es nicht mehr notwendig sein, mehrere hintereinander geschaltete Dual-Cure-Härtungsstationen zu verwenden. Die Prozesszeiten sollen verkürzt werden könnten, wodurch sich die Gefahr der Staubablagerung auf den partiell gehärteten, farb- und/oder effektgebenden Mehrschichtlackierungen deutlich verringert.

Nicht zuletzt soll das neue, integrierte Verfahren die Beschichtung von mikroporösen Oberflächen, wie sie bei SMC, BMC, IMC oder RIMC vorliegen, mit mikrobläschenfreien, farb- und/oder effektgebenden Mehrschichtlackierungen in Automobilqualität gestatten.

Demgemäß wurde das neue, integrierte Verfahren zur Herstellung von farb- und/oder effektgebenden Mehrschichtlackierungen, die
(A) mindestens einen Primer,
(B) mindestens eine farb- und/oder effektgebende Basislackierung und
(C) mindestens eine Klarlackierung
   umfassen, gefunden, bei dem man
   (I) mindestens einen thermisch und mit aktinischer Strahlung härtbaren, pigmentierten oder unpigmentierten Primer (A) auf ein Substrat appliziert, wodurch mindestens eine Primerschicht (A) resultiert,
   (II) die Primerschicht(en) (A) mit aktinischer Strahlung bestrahlt, wodurch mindestens eine partiell gehärtete Primerschicht (A), die noch thermisch gehärtet werden kann, resultiert,
   (III) mindestens einen thermisch härtbaren und/oder mindestens einen thermisch und mit aktinischer Strahlung härtbaren, pigmentierten Beschichtungsstoff (B) auf die äußere Oberfläche der partiell gehärteten Primerschicht(en) (A) appliziert, wodurch mindestens eine pigmentierte Schicht (B), die noch thermisch oder thermisch und mit aktinischer Strahlung gehärtet werden kann, resultiert,
   (IV) die thermisch und mit aktinischer Strahlung härtbare(n) Schicht(en) (B) mit aktinischer Strahlung bestrahlt, wodurch mindestens eine partiell gehärtete Schicht (B), die noch thermisch gehärtet werden kann, resultiert,
   (V) mindestens einen mit aktinischer Strahlung härtbaren und/oder mindestens einen thermisch und mit aktinischer Strahlung härtbaren Klarlack (C) auf die äußere Oberfläche der Schicht(en) (B) appliziert, wodurch mindestens eine mit aktinischer Strahlung härtbare und/oder mindestens eine thermisch und mit aktinischer Strahlung härtbare Klarlackschicht (C) resultiert oder resultieren,
   (VI) die mit aktinischer Strahlung und/oder thermisch und mit aktinischer Strahlung härtbare(n) Klarlackschicht(en) (C) mit aktinischer Strahlung bestrahlt, wodurch mindestens eine mit aktinischer Strahlung gehärtete Klarlackierung (C) und/oder mindestens eine partiell gehärtete Klarlackschicht (C), die noch thermisch gehärtet werden kann, resultiert oder resultieren, und
   (VII) die Primerschicht(en) (A), die pigmentierten Schicht(en) (B) und die noch thermisch härtbare(n) Klarlackschicht(en) (C) gemeinsam thermisch härte.

Im folgenden wird das neue, integrierte Verfahren zur Herstellung von farb- und/oder effektgebenden Mehrschichtlackierungen als »erfindungsgemäßes Verfahren« bezeichnet.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Verfahrens gelöst werden konnte.

So lieferte das erfindungsgemäße Verfahren überraschenderweise rasch, zuverlässig, kostengünstig, energiesparend und mit vergleichsweise geringem apparativen sowie mess- und regeltechnischem Aufwand farb- und/oder effektgebende Mehrschichtlackierungen in Automobilqualität, wobei das erfindungsgemäße Verfahren insgesamt mit weniger Beschichtungsstationen auskam, als die herkömmlichen Verfahren.

Überraschenderweise gestattete das erfindungsgemäße Verfahren auch die Beschichtung thermisch labiler Substrate.

Dabei konnten die eingesetzten Beschichtungsstoffe rasch ausgehärtet werden, und bei der Härtung von Klarlacken kam es nicht mehr zum Schrumpfen der resultierenden Klarlackierungen. Nicht zuletzt konnten bei dem erfindungsgemäßen Verfahren die Anzahl der zusätzlichen beweglichen Bestrahlungseinrichtungen, wie sie üblicherweise bei der Beschichtung komplexer dreidimensionaler Substrate angewandt werden müssen, überraschenderweise signifikant verringert werden, wobei in vielen Fällen ganz auf die beweglichen Bestrahlungseinrichtungen verzichtet werden konnte.

Es war überraschenderweise nicht mehr notwendig, mehrere hintereinander geschaltete Dual-Cure-Härtungsstationen zu verwenden. Die Prozesszeiten konnten daher verkürzt werden können, wodurch sich die Gefahr der Staubablagerung auf den partiell gehärteten farb- und/oder effektgebenden Mehrschichtlackierungen deutlich verringerte.

Nicht zuletzt gestattete das neue, integrierte Verfahren überraschenderweise die Beschichtung von mikroporösen Oberflächen, wie sie bei SMC, BMC, IMC oder RIMC vorliegen, mit mikrobläschenfreien, farb- und/oder effektgebenden Mehrschichtlackierungen in Automobilqualität.

Das erfindungsgemäße Verfahren ist ein integriertes Verfahren. Dies bedeutet, dass die einzelnen Verfahrenschritte des erfindungsgemäßen Verfahrens räumlich und zeitlich genau aufeinander abgestimmt sind, sodass es in der betrieblichen Praxis kontinuierlich in der Lackierlinie eines Automobilherstellers durchgeführt werden kann.

Bei dem erfindungsgemäßen Verfahren werden Substrate beschichtet. Die Substrate können planar oder dreidimensional geformt sein und eine mikroporöse Oberfläche haben. Es ist ein wesentlicher Vorteil des erfindungsgemäßen Verfahrens, dass auch komplex geformte dreidimensional Substrate, die auch eine mikroporöse Oberfläche aufweisen können, erfolgreich beschichtet werden können.

Die Substrate können aus den unterschiedlichsten Materialien bestehen. Beispiele geeigneter Materialien sind Holz, Glas, Leder, Kunststoffe, Metalle, insbesondere reaktive Gebrauchsmetalle, wie Eisen, Stahl, Edelstahl, Zink, Aluminium, Titan und ihre Legierungen untereinander und mit anderen Metallen; Mineralstoffe, insbesondere gebrannter und ungebrannter Ton, Keramik, Natur- und Kunststeine; Schaumstoffe; Fasermaterialien, insbesondere Glasfaser, Keramikfaser, Kohlenstofffaser, Textilfaser, Brennstofffaser oder Metallfaser sowie Verbunde dieser Fasern; oder faserverstärkte Materialien, insbesondere Kunststoffe, die mit den vorstehend genannten Fasern verstärkt sind. Weitere Beispiele geeigneter Substrate sind aus den deutschen Patentanmeldungen DE 199 24 172 A1, Seite 8, Zeilen 21 bis 37, oder DE 199 30 067 A1, Seite 13, Zeile 61, bis Seite 14, Zeile 16, bekannt.

Demgemäß ist das erfindungsgemäße Verfahren auf den unterschiedlichsten technologischen Gebieten mit Vorteil anwendbar. Vorzugsweise ist es für das Beschichten von Kraftfahrzeugkarosserien, insbesondere Nutzfahrzeug- und PKW-Karosserien, sowie Teilen, insbesondere Anbauteilen, hiervon, Bauwerke im Innen- und Außenbereich sowie Teilen hiervon, Türen, Fenster, Möbeln und Glashohlkörpern sowie im Rahmen der industriellen Lackierungen für das Beschichten von Coils, Container, Emballagen, Kleinteilen, wie Muttern, Schrauben, Felgen oder Radkappen; elektrotechnischen Bauteilen, wie Wickelgüter (Spulen, Statoren, Rotoren); und Bauteilen für weiße Ware, wie Radiatoren, Haushaltsgeräte, Kühlschrankverkleidungen oder Waschmaschinenverkleidungen; verwendbar. Die ganz besonderen Vorteil des erfindungsgemäßen Verfahrens zeigen sich bei der Beschichtung von Kraftfahrzeugkarosserien und deren Anbauteilen, insbesondere Anbauteilen auf Basis von SMC, BMC, IMC und RIMC.

Im Rahmen des erfindungsgemäßen Verfahrens werden die eingesetzten Beschichtungsstoffe mit Hilfe üblicher und bekannter Applikationsverfahren auf die Substrate aufgetragen. Das im Einzelfall angewandte Applikationsverfahren richtet sich insbesondere danach, ob der Beschichtungsstoffe flüssig oder pulverförmig ist. Beispiele geeigneter Applikationsverfahren sind Elektrotauchlackieren, Wirbelbettbeschichten, Spritzen, Sprühen, Rakeln, Streichen, Gießen, Tauchen, Träufeln oder Walzen. Vorzugsweise werden Spritzapplikationsmethoden angewandt, es sei denn es handelt sich um Pulver.

Bei der Applikation empfiehlt es sich unter Ausschluss von aktinischer Strahlung zu arbeiten, um eine vorzeitige Vernetzung der Dual-Cure-Beschichtungsstoffe zu vermeiden.

Die Härtung der applizierten Beschichtungsstoffe erfolgt vorzugsweise nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung der applizierten Beschichtungsstoffe und zum Verdunsten von flüchtigen Bestandteilen wie gegebenenfalls vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Vorzugsweise wird bei der Härtung mit aktinischer Strahlung eine Strahlendosis von 10³ bis 4x10⁴, vorzugsweise 2x10³ bis 3x10⁴, bevorzugt 3x10³ bis 2,5x10⁴ und insbesondere 5x10³ bis 2x10⁴ Jm⁻² eingesetzt. Dabei liegt die Strahlenintensität bei 1x10° bis 3x10⁵, vorzugsweise 2x10° bis 2x10⁵, bevorzugt 3x10° bis 1,5x10⁵ und insbesondere 5x10° bis 1,2x10⁵ Wm⁻²_{.}

Für die Härtung mit aktinischer Strahlung werden die üblichen und bekannten Strahlenquellen und optischen Hilfsmaßnahmen angewandt. Beispiele. geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepasst werden. Bei kompliziert geformten Werkstücken, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden. Es ist ein besonderer Vorteil des erfindungsgemäßen Verfahrens, dass auf diese beweglichen Bestrahlungsvorrichtungen weitgehend verzichtet werden kann.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, in der deutschen Patentanmeldung DE 198 18 735 A1, Spalte 10, Zeile 31, bis Spalte 11, Zeile 16, in R. Stephen Davidson, »Exploring the Science, Technology and Applications of U.V. and E.B. Curing«, Sita Technology Ltd., London, 1999, oder in Dipl.-Ing. Peter Klamann, »eltosch System-Kompetenz, UV-Technik, Leitfaden für Anwender«, Seite 2, Oktober 1998, beschrieben. Besonders bevorzugt wird die Härtung mit aktinischer Strahlung unter einer sauerstoffabgereicherten Atmosphäre durchgeführt.

Die gemeinsame thermische Härtung der applizierten Beschichtungsstoffe erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Bei dem erfindungsgemäßen Verfahren wird mindestens ein, insbesondere ein, pigmentierter oder unpigmentierter Dual-Cure-Primer (A) auf die Oberfläche des Substrats appliziert, wodurch mindestens eine, insbesondere eine, Primerschicht (A) resultiert.

Die stofflicher Zusammensetzung des pigmentierten oder unpigmentierten Dual-Cure-Primers ist nicht kritisch, sondern es können die aus der internationalen Patentanmeldung WO 00/73395, Seite 4, Zeilen 4 bis 30, Seite 6, Zeile 13, bis Seite 27, Zeile 13, und Seite 34, Zeilen 11 bis 22, oder der internationalen Patentanmeldung WO 00/68323, Seite 3, Zeile 5, bis Seite 4, Zeile 15,Seite 7, Zeile 29, bis Seite 28, Zeile 5, und Seite 34, Zeilen 5 bis 17, bekannten Dual-Cure-Beschichtungsstoffe angewandt werden.

Besonders bevorzugt wird ein Dual-Cure-Primer (A) verwendet, der
(a1) mindestens einen Bestandteil mit
   (a11) im statistischen Mittel mindestens zwei funktionellen Gruppen pro Molekül, die mindestens eine mit aktinischer Strahlung aktivierbare Bindung enthalten, die der Vernetzung mit aktinischer Strahlung dient, und gegebenenfalls
   (a12) mindestens einer isocyanatreaktiven Gruppe,
(a2) mindestens einen thermisch härtbaren Bestandteil mit mindestens zwei isocyanatreaktiven Gruppen
   und
(a3) mindestens ein Polyisocyanat
enthält.

Der besonders bevorzugte Dual-Cure-Primer (A) enthält mindestens einen Bestandteil (a1) mit im statistischen Mittel mindestens zwei, insbesondere mindestens drei, funktionellen Gruppen (a11) pro Molekül, die mindestens eine, insbesondere eine, mit aktinischer Strahlung aktivierbare Bindung enthalten, die der Vernetzung mit aktinischer Strahlung dient, und gegebenenfalls mindestens einer, insbesondere mindestens zwei, isocyanatreaktiven Gruppe(n) (a12).

Bevorzugt enthält der Dual-Cure-Primer (A) im statistischen Mittel nicht mehr als sechs, insbesondere nicht mehr als fünf funktionelle Gruppen (a11) pro Molekül.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen. Von diesen werden die Doppelbindungen, insbesondere die Kohlenstoff-Kohlenstoff-Doppelbindungen, bevorzugt angewandt.

Gut geeignete Kohlenstoff-Kohlenstoff-Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Alkyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Beispiele geeigneter isocyanatreaktiver Gruppen (a12) sind Thiol-, primäre oder sekundäre Amino-, Imino- oder Hydroxylgruppen, insbesondere Hydroxylgruppen.

Der Bestandteil (a1) ist oligomer oder polymer.

Im Rahmen der vorliegenden Erfindung wird unter einem Oligomer eine Verbindung verstanden, welche im allgemeinen im Mittel 2 bis 15 Grundstrukturen oder Monomereinheiten aufweist. Unter einem Polymeren wird dagegen eine Verbindung verstanden, welche im allgemeinen im Mittel mindestens 10 Grundstrukturen oder Monomereinheiten aufweist. Verbindungen dieser Art werden von der Fachwelt auch als Bindemittel oder Harze bezeichnet.

Im Unterschied dazu ist im Rahmen der vorliegenden Erfindung unter einer niedermolekularen Verbindung, eine Verbindung zu verstehen, welche sich im wesentlichen nur von einer Grundstruktur oder einer Monomereinheit ableitet. Verbindungen dieser Art werden von der Fachwelt im allgemeinen auch als Reaktiwerdünner bezeichnet.

Die als Bindemittel (a1) eingesetzten Polymere bzw. Oligomere weisen üblicherweise ein zahlenmittleres Molekulargewicht von 500 bis 50.000, bevorzugt von 1.000 bis 5.000, auf. Bevorzugt weisen sie ein Doppelbindungsäquivalentgewicht von 400 bis 2.000, besonders bevorzugt von 500 bis 900, auf. Außerdem weisen sie bei 23 °C bevorzugt eine Viskosität von 250 bis 11.000 mPas auf. Vorzugsweise werden sie in einer Menge von 5 bis 50 Gew.-%, bevorzugt 6 bis 45 Gew.-% besonders bevorzugt 7 bis 40 Gew.-%, ganz besonders bevorzugt 8 bis 35 Gew.-% und insbesondere 9 bis 30 Gew.-%, jeweils bezogen auf den Festkörper des erfindungsgemäßen Beschichtungsstoffs angewandt.

Beispiele geeigneter Bindemittel oder Harze (a1) entstammen den Oligomer- und/oder Polymerklassen der (meth)acrylfunktionellen (Meth)Acrylcopolymeren, Polyetheracrylaten, Polyesteracrylaten, Polyestern, Epoxyacrylaten, Urethanacrylaten, Aminoacrylaten, Melaminacrylaten, Silikonacrylaten und Phosphazenacrylaten und den entsprechenden Methacrylaten. Bevorzugt werden Bindemittel (a1) eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Urethan(meth)acrylate (a1) werden erhalten durch Umsetzung eines Di- oder Polyisocyanats mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmitteln, Di- bzw. Polyisocyanaten und Hydroxyalkylestern werden dabei bevorzugt so gewählt, daß
1.) das Äquivalentverhältnis der NCO-Gruppen zu den reaktiven Gruppen des Kettenverlängerungsmittels (Hydroxyl-, Amino- bzw. Mercaptylgruppen) zwischen 3 : 1 und 1 : 2, bevorzugt bei 2 : 1, liegt und
2.) die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate herzustellen, indem zunächst ein Teil der Isocyanatgruppen eines Di- oder Polyisocyanates mit mindestens einem Hydroxyalkylester umgesetzt wird, und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 3: 1 und 1 : 2, bevorzugt bei 2:1 liegt und das Äquivalentverhältnis der restlichen NCO-Gruppen zu den OH-Gruppen des Hydroxyalkylesters 1 : 1 beträgt. Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem Hydroxyalkylester und im Anschluß hieran können die restlichen Isocyanatgruppen mit einem Diamin umgesetzt werden.

Eine Flexibilisierung der Urethan(meth)acrylate (a1) ist beispielsweise dadurch möglich, daß entsprechende isocyanat-funktionelle Präpolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Präpolymere durchgeführt werden.

Als Beispiele für geeignete Urethan(meth)acrylate (a1) seien auch die folgenden, im Handel erhältlichen polyfunktionellen aliphatischen Urethanacrylate genannt:
- Crodamer® UVU 300 der Firma Croda Resins Ltd., Kent, Großbritanniens;
- Genomer® 4302, 4235, 4297 oder 4316 der Firma Rahn Chemie, Schweiz;
- Ebecryl® 284, 294, IRR 351, 5129 oder 1290 der Firma UCB, Drogenbos, Belgien;
- Roskydal® LS 2989 oder LS 2545 oder V94-504 der Firma Bayer AG, Deutschland;
- Viaktin® VTE 6160 der Firma Vianova, Österreich; oder
- Laromer® 8861 der Firma BASF AG sowie davon abgewandelte Versuchsprodukte.

Hydroxylgruppenhaltige Urethan(meth)acrylate (a1) sind beispielsweise aus den Patentschriften US 4,634,602 A öder US 4,424,252 A bekannt.

Ein Beispiel für ein geeignetes Polyphosphazen(meth)acrylat (a1) ist das Phosphazendimethacrylat der Firma Idemitsu, Japan.

Desweiteren enthält der Dual-Cure-Primer (A) mindestens einen thermisch härtbaren Bestandteil (a2) mit mindestens zwei, insbesondere mindestens drei, isocyanatsreaktiven Gruppen. Beispiele geeigneter isocyanatreaktiver Gruppen sind die vorstehend beschriebenen.

Der Bestandteil (a2) ist oligomer oder polymer.

Beispiele geeigneter Bestandteile (a2) sind lineare und/oder verzweigte und/oder blockartig, kammartig und/oder statistisch aufgebaute Oligomere oder Polymere, wie (Meth)Acrylat(co)polymerisate, Polyester, Alkyde, Aminoplastharze, Polyurethane, Polylactone, Polycarbonate, Polyether, Epoxidharz-Amin-Addukte, (Meth)Acrylatdiole, partiell verseifte Polyvinylester oder Polyharnstoffe, von denen die (Meth)Acrylatcopolymerisate, die Polyester, die Polyurethane, die Polyether und die Epoxidharz-Amin-Addukte, insbesondere aber die Polyester, vorteilhaft sind.

Geeignete Bindemittel (a2) werden beispielsweise unter den Handelsnamen Desmophen® 650, 2089, 1100, 670, 1200 oder 2017 von der Firma Bayer, unter den Handelsnamen Priplas oder Pripol® von der Firma Uniqema, unter den Handelsnamen Chempol® Polyester oder Polyacrylat-Polyol von der Firma CCP, unter den Handelsnamen Crodapol® 0-25, 0-85 oder 0-86 von der Firma Croda oder unter dem Handelsnamen Formrez® ER417 von der Firma Witco vertrieben.

Der Anteil der Bestandteile (a2) an den Beschichtungsstoffen kann breit variieren und richtet sich nach den Erfordernissen des Einzelfalls. Vorzugsweise werden sie in einer Menge von 5 bis 90 Gew.-%, bevorzugt 6 bis 80 Gew.-% besonders bevorzugt 7 bis 70 Gew.-% ganz besonders bevorzugt 8 bis 60 Gew.-% und insbesondere 9 bis 50 Gew.-%, jeweils bezogen auf den Festkörper des Beschichtungsstoffs, angewandt.

Der Beschichtungsstoff enthält desweiteren mindestens ein Polyisocyanat (a3).

Vorzugsweise werden die Polyisocyanate (a3) aus der Gruppe, bestehend aus Polyisocyanaten die im statistischen Mittel mindestens 2,0 bis 10, vorzugsweise 2,1 bis 6 blockierte und/oder unblockierte Isocyanatgruppen im Molekül enthalten ausgewählt. Bevorzugt werden die Polyisocyanate aus der Gruppe, bestehend aus Polyisocyanaten, die im statistischen Mittel mindestens eine Isocyanurat-, Biuret-, Allophanat-, Iminooxadiazindion-, Urethan-, Harnstoff-, Carbodiimid- und/oder Uretdiongruppe im Molekül enthalten, ausgewählt.

Beispiele geeigneter Polyisocyanate (a3) sind aus der deutschen Patentanmeldung DE 199 24 170 A1, Spalte 3, Zeile 61, bis Spalte 6, Zeile 14, und Spalte 10, Zeile 60, bis Spalte 11, Zeile 38, oder den Schriften CA 2,163,591 A, US 4,419,513 A, US 4,454,317 A, EP 0 646 608 A1, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1oder EP 0 531 820 A1 bekannt oder sie werden in der nicht vorveröffentlichten deutschen Patentanmeldung DE 100 05 228.2 beschrieben. Außerdem kommen die hochviskosen Polyisocyanate, wie sie in der deutschen Patentanmeldung DE 198 28 935 A1 beschrieben werden, die an ihrer Oberfläche durch Harnstoffbildung und/oder Blockierung desaktivierten Polyisocyanatpartikel gemäß den europäischen Patentanmeldungen EP 0 922 720 A1, EP 1 013 690 A1 und EP 1 029 879 A1 oder Nonyltriisocyanat (NTI) in Betracht. Desweiteren kommen die in der deutschen Patentanmeldung DE 196 09 617 A1 beschriebenen Addukte von Polyisocyanaten mit isocyanatreaktiven funktionellen Gruppen enthaltenden Dioxanen, Dioxolanen und Oxazolidinen, die noch freie Isocyanatgruppen enthalten, sowie die Isocyanatoacrylate der europäischen Patentanmeldung EP 0 928 800 A1 als Polyisocyanate (a3) in Betracht.

Die Polyisocyanate (a3) können partiell oder vollständig blockiert sein. Beispiele geeigneter Blockierungsmittel für die Blockierung der freien Isocyanatgruppen in den Polyisocyanaten (a3) sind aus der deutschen Patentanmeldung DE 199 24 170 A1, Spalte 6, Zeilen 19 bis 53, bekannt.

Der Gehalt des Dual-Cure-Primers (A) an Polyisocyanaten (a3) kann sehr breit variieren und richtet sich nach den Erfordernissen des Einzelfalls, insbesondere nach dem Gehalt der Bestandteile (a2) und gegebenenfalls (a1) an isocyanatoreaktiven Gruppen. Vorzugsweise liegt der Gehalt bei 5 bis 50 Gew.-%, bevorzugt 6 bis 45 Gew.-%, besonders bevorzugt 7 bis 40 Gew.-%, ganz besonders bevorzugt 8 bis 35 Gew.-% und insbesondere 9 bis 30 Gew.-%, jeweils bezogen auf den Festkörper des Dual-Cure-Primers (A).

Der Dual-Cure-Primer (A) kann darüber hinaus noch mindestens ein Pigment und/oder einen Füllstoff enthalten. Dabei kann es sich um farb- und/oder effektgebende, fluoreszierende, elektrisch leitfähige, magnetisch abschirmende und/oder vor Korrosion schützende Pigmente, Metallpulver, kratzfest machende Pigmente, organische Farbstoffe, organische und anorganische, transparente oder opake Füllstoffe und/oder Nanopartikel handeln.

Wird der Beschichtungsstoff zur Herstellung von elektrisch leitfähigen Primern (A) verwendet, enthält er vorzugsweise mindestens ein elektrisch leitfähiges Pigment und/oder mindestens einen elektrisch leitfähigen Füllstoff.

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen wie Aluminium, Zink, Kupfer, Bronze oder Messing.

Geeignete lösliche organische Farbstoffe sind lichtechte organische Farbstoffe mit einer geringen oder nicht vorhandenen Neigung zur Migration aus dem neuen wäßrigen Mehrkomponentenbeschichtungstoff und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Polyamid oder Polyacrylnitril. Ergänzend wird auf Römpp Lexikon Lacke und Druckfarben, Georg Thieme Verlag, 1998, Seiten 250 ff., »Füllstoffe«, verwiesen.

Beispiele geeigneter transparenter Füllstoffe sind solche auf der Basis von Siliziumdioxid, Aluminiumoxid oder Zirkoniumoxid, insbesondere aber Nanopartikel auf dieser Basis.

Der Gehalt des Dual-Cure-Primers (A) an den vorstehend beschriebenen Pigmenten und/oder Füllstoffen kann sehr breit variieren und richtet sich nach den Erfordernissen des Einzelfalls. Vorzugsweise liegt er, bezogen auf den Festkörper des Beschichtungsstoffs, bei 5 bis 50, bevorzugt 5 bis 45, besonders bevorzugt 5 bis 40, ganz besonders bevorzugt 5 bis 35 und insbesondere 5 bis 30 Gew.-%.

Desweiteren kann der Dual-Cure-Primer (A) mindestens einen Tackifier enthalten. Als Tackifier werden polymere Zusatzstoffe für Klebstoffe bezeichnet, die deren Tack, d.h. ihre Eigenklebrigkeit oder Selbsthaftung, erhöhen, so daß sie nach kurzem leichten Andruck fest auf Oberflächen haften (vgl. Ullmann's Encyclopedia of Industrial Chemistry, CD-ROM, Wiley VCH, Weinheim, 1997, "Tackifier").

Beispiele geeigneter Tackifier sind hochflexible Harze, ausgewählt aus der Gruppe bestehend aus
- Homopolymerisaten von Alkyl(meth)acrylaten, insbesondere Alkylacrylaten, wie Poly(isobutylacrylat) oder Poly(2-ethylhexylacrylat), die unter der Marke Acronal® von der Firma BASF Aktiengesellschaft, unter der Marke Elvacite® von der Firma Dupont, unter der Marke Neocryl® von der Firma Avecia und Plexigum® von der Firma Roehm vertrieben werden;
- linearen Polyestern, wie sie in üblicher Weise für das Coil Coating verwendet und beispielsweise unter der Marke Dynapol® von der Firma Dynamit Nobel, unter der Marke Skybond® von der Firma SK Chemicals, Japan, oder unter der Handelsbezeichnung LTW von der Firma Hüls vertrieben werden;
- linearen difunktionellen, mit aktinischer Strahlung härtbaren Oligomeren eines zahlenmittleren Molekulargewichts von mehr als 2.000, insbesondere 3.000 bis 4.000, auf der Basis von Polycarbonatdiol oder Polyesterdiol, die unter der Bezeichnung CN 970 von der Firma Craynor oder der Marke Ebecryl® von der Firma UCB vertrieben werden;
- linearen Vinyletherhomo- und -copolymerisaten auf der Basis von Ethyl-, Propyl-, Isobutyl-, Butyl- und/oder 2-Ethylhexylvinylether, die unter der Marke Lutonal® von der Firma BASF Aktiengesellschaft vertrieben werden; und
- nichtreaktiven Urethan-Harnstoff-Oligomeren, die aus Bis(4,4-isocyanatophenyl) methan, N,N-Dimethylethanolamin und Diolen wie Propandiol, Hexandiol oder Dimethylpentandiol hergestellt werden und z.B. von der Firma Swift Reichold unter der Marke Swift Range® oder der Firma Mictchem Chemicals unter den Marken Surkopack® oder Surkofilm® vertrieben werden.

Vorzugsweise werden die Tackifier in einer Menge von 0,1 bis 10 Gew.-%, bevorzugt 0,2 bis 9 Gew.-%, besonders bevorzugt 0,3 bis 8 Gew.-% ganz besonders bevorzugt 0,4 bis 7 Gew.-% und insbesondere 0,56 Gew.-%, jeweils bezogen auf den Festkörper des erfindungsgemäßen Beschichtungsstoffs, eingesetzt.

Darüber hinaus kann der Dual-Cure-Primer (A) mindestens einen Photoinitiator enthalten. Wenn der Beschichtungsstoff mit UV-Strahlung vernetzt werden soll, ist die Verwendung eines Photoinitiators im allgemeinen notwendig. Sofern sie mitverwendet werden, sind sie in dem Dual-Cure-Primer (A) vorzugsweise in Anteilen von 0,1 bis 10 Gew.-%, bevorzugt 0,2 bis 8 Gew.-%, besonders bevorzugt 0,3 bis 7 Gew.-%, ganz besonders bevorzugt 0,4 bis 6 Gew.-% und insbesondere 0,5 bis 5 Gew.-%, jeweils bezogen auf den Festkörper des Dual-Cure-Primer (A), enthalten.

Beispiele geeigneter Photoinitiatoren sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure® MBF der Firma Rahn und Lucirin® TPO der Firma BASF AG erhältlichen Produkte eingesetzt werden.

Neben den Photoinitiatoren können übliche Sensibilisatoren wie Anthracen in wirksamen Mengen verwendet werden.

Des weiteren kann der Dual-Cure-Primer (A) mindestens einen Zusatzstoff, ausgewählt aus der Gruppe, bestehend aus thermisch härtbaren Reaktivverdünnern; von den Polyisocyanaten (a3) verschiedenen Vernetzungsmitteln; Lichtschutzmitteln, wie UV-Absorber und reversible Radikalfänger (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; Katalysatoren für die thermische Vernetzung; thermolabilen radikalischen Initiatoren; Haftvermittlern; Verlaufmitteln; filmbildenden Hilfsmitteln; Rheologiehilfsmitteln; Flammschutzmitteln; Korrosionsinhibitoren; Rieselhilfen; Wachsen; Sikkativen; Bioziden und Mattierungsmitteln, enthalten.

Beispiele geeigneter Zusatzstoffe werden im Detail in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, in der deutschen Patentanmeldung DE 199 14 896 A1, Spalte 14, Seite 26, bis Spalte 15, Zeile 46, oder in der deutschen Patentanmeldung DE 199 08 018 A1, Seite 9, Zeile 31, bis Seite 8, Zeile 30, im Detail beschrieben. Ergänzend wird noch auf die deutschen Patentanmeldungen DE 199 04 317 A1 und DE 198 55 125 A1 verwiesen.

Besondere Vorteile resultieren, wenn in dem Dual-Cure-Primer (A) das Verhältnis von Isocyanatgruppen zur Summe der isocyanatreaktiven funktionellen Gruppen < 1,3, vorzugsweise von 0,5 bis 1,25,bevorzugt 0,75 bis 1,1, besonders bevorzugt < 1 und insbesondere von 0,75 bis 1 ist.

Weitere besondere Vorteile resultieren, wenn der thermisch härtbare Bestandteil (a2) eine Uneinheitlichkeit des Molekulargewichts (massenmittleres Molekulargewicht Mn/zahlenmittleres Molekulargewicht Mn) von < 4,vorzugsweise < 3,5, besonders bevorzugt von 1,5 bis 3,5 und insbesondere von 1,5 bis 3 hat.

Darüber hinaus ergeben sich noch besondere Vorteile, wenn in dem Dual-Cure-Primer (A) das Verhältnis von Festkörpergehalt an mit aktinischer Strahlung härtbaren Bestandteilen (UV) zu Festkörpergehalt an thermisch härtbaren Bestandteilen (TH) bei (UV)/(TH) = 0,2 bis 0,6, vorzugsweise 0,25 bis 0,5 und insbesondere 0,3 bis 0,45.

Nicht zuletzt ergeben sich besondere Vorteile, wenn der thermisch härtbare Bestandteil (a2), bezogen auf seine Gesamtmenge, einen Gehalt an aromatischen Struktureinheiten < 5,bevorzugt < 2 und insbesondere 0 bis < 2 Gew.% aufweist.

Der vorstehend beschriebene Dual-Cure-Primer (A) wird durch Vermischen und Homogenisieren der vorstehend beschriebenen Bestandteile mit Hilfe üblicher und bekannter Mischverfahren und Vorrichtungen, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer vorzugsweise unter Ausschluss von aktinischer Strahlung, hergestellt.

Nach ihrer Applikation wird die Dual-Cure-Primerschicht (A) mit aktinischer Strahlung bestrahlt, wodurch eine partiell gehärtete Primerschicht (A), die noch thermisch gehärtet werden kann, resultiert.

Auf die partiell gehärtete Dual-Cure-Primerschicht (A) wird oder werden mindestens ein, insbesondere ein, thermisch härtbarer und/oder mindestens ein, insbesondere ein, thermisch und mit aktinischer Strahlung härtbarer Beschichtungsstoff (B) appliziert. Hierdurch resultiert mindestens eine pigmentierte Schicht (B), die noch thermisch oder thermisch und mit aktinischer Strahlung gehärtet werden kann.

Vorzugsweise wird ein thermisch härtbarer oder ein thermisch und mit aktinischer Strahlung härtbarer Beschichtungsstoff (B) eingesetzt.

Als Dual-Cure Beschichtungsstoffe (B) können die vorstehend beschriebenen pigmentierten Dual-Cure-Primer (A) verwendet werden.

Als thermisch härtbare Beschichtungsstoffe (B) können übliche und bekannter Basislacken, insbesondere Wasserbasislacke, wie sie aus den Schriften Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590484 A1, EP 0 234 362 A1, EP 0 234 361 A1, EP 0 543 817 A1, WO 95/14721, EP 0 521 928 A1, EP 0 522 420 A1, EP 0 522 419 A1, EP 0 649 865 A1, EP 0 536 712 A1, EP 0 596 460 A1, EP 0 596 461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1, EP 0 496 205 A1, EP 0 358 979 A1, EP 469 389 A1, DE 24 46 442 A1, DE 34 09 080 A1, DE 195 47 944 A1, DE 197 41 554 A1 oder EP 0 817 684, Spalte 5, Zeilen 31 bis 45, bekannt sind, verwendet werden.

Wird eine Dual-Cure-Schicht (B) eingesetzt, wird sie mit aktinischer Strahlung bestrahlt, wodurch eine partiell gehärtete Schicht (B) resultiert, die noch thermisch gehärtet werden kann.

Auf die äußere Oberfläche der thermisch härtbaren Schichten (B) wird mindestens ein, insbesondere ein, Dual-Cure-Klartack (C) appliziert, wodurch mindestens eine, insbesondere eine, thermisch und mit aktinischer Strahlung härtbare Klarlackschicht (C) resultiert.

Als Dual-Cure-Klarlack (C) kann der vorstehend beschriebene nichtpigmentierte Dual-Cure-Primer (A) verwendet werden. Es kommen auch die aus den Patentanmeldungen DE 198 18 735 A1, WO 98/40170, DE 199 08 013 A1, DE 199 08 018 A1, EP 0 844 286 A1 oder EP 0 928 800 A1 bekannten thermisch und mit aktinischer Strahlung härtbaren Klarlacke, Pulverklarlacke und Pulverslurry-Klarlacke als Dual-Cure-Klarlacke (C) in Betracht.

Alternativ oder zusätzlich zu dem Dual-Cure-Klarlack (C) kann mindestens ein, insbesondere ein, nur mit aktinischer Strahlung härtbarer Klarlack (C) aufgetragen werden. Geeignete Klarlacke dieser Art sind aus beispielsweise der internationalen Patentanmeldung WO 98/40171 bekannt.

Vorzugsweise werden Dual-Cure-Klarlacke (C) angewandt.

Die Dual-Cure-Klarlackschicht (C) wird mit aktinischer Strahlung bestrahlt, wodurch eine partiell gehärtete Klarlackschicht (C) resultiert, die noch thermisch gehärtet werden kann.

Die mit aktinischer Strahlung härtbare Klarlackschicht (C) wird gleichfalls mit aktinischer Strahlung bestrahlt, wodurch eine gehärtete Klarlackierung (C) resultiert.

Im Anschluss daran werden die Primerschicht(en) (A), die pigmentierte(n) Schicht(en) (B) und die partiell gehärteten Klarlackschicht(en) (C) gemeinsam thermisch gehärtet. Ist oder sind die Klarlackschicht(en) (C) bereits vollständig gehärtet und in die Klarlackierung(en) (C) umgewandelt, kann die thermische Härtung auch entfallen.

Insgesamt resultiert erfindungsgemäß die farb- und/oder effektgebende Mehrschichtlackierung, die mindestens einen Primer (A), mindestens eine farb- und/oder effektgebende Basislackierung (B) und mindestens eine Klarlackierung (C) umfasst.

Die nach dem erfindungsgemäßen Verfahren hergestellte farb- und/oder effektgebende Mehrschichtlackierung kann noch mit anderen Beschichtungsstoffen überschichtet werden, beispielsweise mit Sealer, wie sie aus den Patentanmeldungen DE 199 10 876 A1, DE 38 36 815 A1, DE 198 4 3 581 A1, DE 199 09 877 A1, DE 139 40 858 A1, DE 198 16 136 A1, EP 0 365 027 A2 oder EP 0 450 625 A1 bekannt sind. Sealer werden auch unter der Marke Ormocer ® (organically modified ceramic) vertrieben.

Das erfindungsgemäße Verfahren ist rasch und zuverlässig, kostengünstig, energiesparend und mit vergleichsweise geringem apparativen sowie mess- und regeltechnischem Aufwand durchzuführen. Insgesamt kommt es in der Linie mit weniger Beschichtungsstationen aus, als herkömmliche Verfahren. Mit dem erfindungsgemäßen Verfahren können auch thermisch labile Substrate beschichtet werden. Auch die pigmentierten Beschichtungsstoffe werden rasch ausgehärtet, und bei der Härtung von Klarlacken kommt es nicht mehr zum Schrumpfen der resultierenden Klarlackierungen. Nicht zuletzt kann die Anzahl der zusätzlichen beweglichen Bestrahlungseinrichtungen, wie sie üblicherweise bei der Beschichtung komplexer dreidimensionaler Substrate angewandt werden müssen, signifikant verringert werden, bzw. es kann in vielen Fällen völlig darauf verzichtet werden. Außerdem ist es nicht mehr notwendig, mehrere hintereinander geschaltete Dual-Cure-Härtungsstationen zu verwenden. Die Prozesszeiten können verkürzt werden, wodurch sich die Gefahr der Staubablagerung auf den partiell gehärteten farb- und/oder effektgebenden Mehrschichtlackierungen deutlich verringert. Nicht zuletzt gestattet das erfindungsgemäße Verfahren die Beschichtung von mikroporösen Oberflächen, wie sie bei SMC, BMC, IMC oder RIMC vorliegen, mit mikrobläschenfreien, farb- und/oder effektgebenden Mehrschichtlackierungen in Automobilqualität. Die Haftung der in erfindungsgemäßer Verfahrensweise hergestellten farb- und/oder effektgebenden Mehrschichtlackierungen sowie die Zwischenschichthaftung sind sehr gut. Die Mehrschichtlackierungen weisen auch einen sehr guten optischen Gesamteindruck (Appearance) auf.

### Beispiele und Vergleichsversuche

### Herstellbeispiele 1 und 2

### Die Herstellung der Dual-Cure-Primer (A 1) und (A 2)

Zur Herstellung des Dual-Cure-Primers (A 1) wurden
- 32,1 Gewichtsteile eines gesättigten Polyesters (Setal ® 1615 SS 75, 75% Festkörper in Butylacetat, der Firma Akzo Nobel),
- 14,9 Gewichtsteile eines acrylierten aliphatischen Urethanoligomeren (IRR 351 der Firma UCB, Hydroxylzahl: 75 bis 90 mg KOH/g, zahlenmittleres Molekulargewicht (theoretisch): 600 Dalton, mittlere Doppelbindungs-Funktionalität (theoretisch): 3;9),
- 0,47 Gewichtsteile eines Rheologiehilfsmittels (Bentone ® SD2 der Firma Rheox),
- 0,24 Gewichtsteile eines handelsüblichen Dispergierhilfsmittels (Antiterra ® U der Firma Byk ),
- 4,03 Gewichtsteile Butylacetat,
- 22,6 Gewichtsteile eines handelsüblichen Pigments (Micavor ® 20 der Firma DAM Les Produits GmbH),
- 0,47 Gewichtsteile eines Verlaufmittels (Disparlon ® LC 900 der Firma King Industries),
- 10,2 Gewichtsteile Ethylethoxypropionat,
- 2,0 min Gewichtsteile eines Tackifiers (Polyesterhaftharz LTW der Firma Hüls, 60%ig in Xylol),
- 0,2 Gewichtsteile eines Lithiumsalzkatalysators (Nuodex ® LI der Firma OMG),
- 0,1 Gewichtsteile eines Photoinitiators (Irgacure ® 819 der Firma Ciba Specialties),
- 0,96 Gewichtsteile eines Photoinitiators (Lucirin ® TPO der Firma BASF Aktiengesellschaft) und
- 11,73 Gewichtsteile Ethylethoxypropionat sowie
- 20 Gewichtsteile eines HDI-Trimeren (Desmodur ® N 3390 der Firma Bayer-Aktiengesellschaft, 90%ig)
in der angegebenen Reihenfolge miteinander vermischt und anschließend homogenisiert. Das Verhältnis (UV)/(TH) lag bei 0,354.

Zur Herstellung des Dual-Cure-Primers (A 2) wurden
- 32,1 Gewichtsteile eines gesättigten Polyesters (Setal ® 1615 SS 75, 75% Festkörper in Butylacetat, der Firma Akzo Nobel),
- 14,9 Gewichtsteile eines acrylierten aliphatischen Urethanoligomeren (IRR 351 der Firma UCB, Hydroxylzahl: 75 bis 90 mg KOH/g, zahlenmittleres Molekulargewicht (theoretisch): 600 Dalton, mittlere Doppelbindungs-Funktionalität (theoretisch): 3,9),
- 0,47 Gewichtsteile eines Rheologiehilfsmittels (Bentone ® SD2 der Firma Rheox),
- 0,24 Gewichtsteile eines handelsüblichen Dispergierhilfsmittels (Antiterra ® U der Firma Byk ),
- 4,03 Gewichtsteile Butylacetat,
- 6,8 Gewichtsteile eines handelsüblichen monokristallinen, hydratisierten Magnesiumsilikats (Mistron ® Monomix der Firma Luzenac NV),
- 0,47 Gewichtsteile eines Verlaufmittels (Disparlon ® LC 900 der Firma King Industries),
- 10,2 Gewichtsteile Ethylethoxypropionat,
- 15,8 Gewichtsteile eines elektrisch leitfähigen Micapigments (Minatec ® 40CM der Firma EM Industries),
- 2,0 min Gewichtsteile eines Tackifiers (Polyesterhaftharz LTW der Firma Hüls, 60%ig in Xylol),
- 0,2 Gewichtsteile eines Lithiumsalzkatalysators (Nuodex ® LI der Firma OMG),
- 0,1 Gewichtsteile eines Photoinitiators (Irgacure ® 819 der Firma Ciba Specialties),
- 0,96 Gewichtsteile eines Photoinitiators (Lucirin ® TPO der Firma BASF Aktiengesellschaft) und
- 11,73 Gewichtsteile Ethylethoxypropionat sowie
- 20 Gewichtsteile eines HDI-Trimeren (Desmodur ® N 3390 der Firma Bayer-Aktiengesellschaft, 90%ig)
in der angegebenen Reihenfolge miteinander vermischt und anschließend homogenisiert. Das Verhältnis (UV)/(TH) lag bei 0,354.

### Herstellbeispiel 3

### Die Herstellung eines Methacrylatcopolymerisats

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflusskühler, wurde 650 Gewichtsteile einer Fraktion aromatischer Kohlenwasserstoffe mit einem Siedebereich von 158 bis 172 °C eingewogen. Das Lösemittel wurde auf 140 °C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteile Acrylsäure innerhalb von vier Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach der Beendigung des Initiatorzulaufs wurde die resultierende Reaktionsmischung während weiterer zwei Stunden auf 140 °C unter Rühren erhitzt und anschließend abgekühlt. Die resultierende Lösung des Methacrylatcopolymerisats wurde mit einem Gemisch aus 1-Methoxypropylacetat-2, Butylglykolacetat und Butylacetat verdünnt.

Die resultierende Lösung wies einen Feststoffgehalt von 65 Gew.-%, bestimmt in einem Umluftofen (eine Stunde/130 °C), eine Säurezahl von 15 mg KOH/g Festkörper, eine OH-Zahl von 175 mg KOH/g Festkörper und eine Glasübergangstemperatur von -21 °C auf.

### Herstellungsbeispiel 4

### Die Herstellung eines Dual-Cure-Klarlacks (C)

Der Dual-Cure-Klarlack (C) wurde durch Vermischen der in der Tabelle 1 angegebenen Bestandteile und Homogenisieren der resultierenden Mischung hergestellt.

**Tabelle 1: Die stoffliche Zusammensetzung des Dual-Cure-Klarlacks (C)**

| **Bestandteil** | **Gewichtsteile:** |
|---|---|
| Stammlack: | |
| | |
| Methacrytatcopolymerisat des Herstellbeispiels 3 | 35,9 |
| | |
| Dipentaerythritpentaacrylat | 20,0 |
| | |
| UV-Absorber (substituiertes Hydroxyphenyltriazin) | 1,0 |
| | |
| HALS (N-Methyl-2,2,6,6-tetramethylpiperidinylester) | 1,0 |
| | |
| Additiv (Byk ® 358 der Firma Byk Chemie) | 0,2 |
| | |
| Butylacetat 98-100 | 29,4 |
| | |
| Irgacure ® 184 (handelsüblicher Fotoinitiator der | |
| Firma Ciba Specialty Chemicals) | 1,0 |
| | |
| Lucirin ® TPO (handelsüblicher Fotoinitiator der | |
| Firma BASF AG auf Basis von Acylphosphinoxid) | 0,5 |
| | |
| Solventnaphtha ® | 11,0 |
| | |
| **Summe:** | **100** |
| **Gewichtsteile** | |
| | |

| Vernetzungsmittelkomponente: | |
|---|---|
| **Summe:** | **35,8** |
| Gewichtsteile | |
| | |

| Vernetzungsmittel 1: | |
|---|---|
| Isocyanatoacrylat Roskydal ® UA VPLS 2337 der Firma Bayer AG (Basis: Trimeres Hexamethylen-diisocyanat; Gehalt an Isocyanatgruppen: 12 Gew.-%) | 26,02 |
| | |

| Vernetzungsmittel 2: | |
|---|---|
| Isocyanatoacrylat Roskydal ® UA VP FWO 3003-77 der Firma Bayer AG auf der Basis des Trimeren von Isophorondiisocyanat (70,5 %ig in Butylacetat; Viskosität: 1.500 mPas; Gehalt an Isocyanatgruppen: 6,7 Gew.-%) | 6,52 |
| | |
| Butylacetat | 3,26 |

### Beispiele 1 bis 6 und Vergleichsversuche V 1 bis V 6

### Der Herstellung von farbgebenden Mehrschichtlackierungen nach dem erfindungsgemäßen Verfahren (Beispiele 1 bis 6) und nach einem nicht erfindungsgemäßen Verfahren (Vergleichsversuche V 1 bis V 6)

Für die Beispiele 2, 4 und 6 sowie für die Vergleichsversuche V 2, V 4 und V 6 wurde der Dual-Cure-Primer (A 1) des Herstellungsbeispiels 1 verwendet.

Für die Beispiele 1, 3 und 5 sowie für die Vergleichsversuche V 1, V 3 und V 5 wurde der Dual-Cure-Primer (A 2) des Herstellbeispiels 2 verwendet.

Für die Beispiele 1 und 2 und die Vergleichsversuche V 1 und V 2 wurden übliche und bekannte IMC als Substrate verwendet.

Für die Beispiele 3 und 4 und die Vergleichsversuche V 3 und V 4 wurden übliche und bekannte SMC als Substrate verwendet.

Für die Beispiele 5 und 6 und die Vergleichsversuche V 5 und V 6 wurden übliche und bekannter Bonderbleche verwendet.

Bei allen Beispielen und Vergleichsversuchen wurden die Dual-Cure-Primer (A) mit Hilfe pneumatischer Sprühpistolen in einer Nassschichtdicke aufgetragen, dass nach der Aushärtung Primer (A) einer Trockenschichtdicke von 25 bis 27 µm vorlagen.

Bei den Beispielen 1 bis 6 und den Vergleichsversuchen V 1 bis V 6 wurden die resultierenden Primerschichten (A) mit UV-Strahlung einer Dosis 1,5 x10⁴ Jm⁻² bestrahlt, wonach sie noch thermisch härtbar waren.

Bei den Vergleichsversuchen V 1 bis V 6 wurden die resultierenden Primerschichten (A) zusätzlich noch während 20 Minuten bei 80 °C thermisch gehärtet, wonach sie vollständig ausgehärtet waren.

Auf die thermisch härtbaren Primerschichten (A) der Beispiele 1 bis 6 und die vollständig ausgehärteten Primerschichten (A) der Vergleichsversuche V 1 bis V 6 wurde jeweils ein thermisch härtbarer handelsüblicher Wasserbasislack (B) (Nachtschwarz der Firma BASF Coatings AG) pneumatisch in einer Nassschichtdicke appliziert, dass nach der vollständigen Härtung die Basislackierungen (B) eine Trockenschichtdicke von 12 bis 15 µm auf aufwiesen. Die applizierten Basislackschichten (B) wurden während zehn Minuten bei 80 °C getrocknet.

Auf die getrockneten Basislackschichten (B) wurde der Dual-Cure-Klarlack (C) des Herstellbeispiels 4 in einem Kreuzgang pneumatisch appliziert. Die Nassschichtdicke wurde so eingestellt, dass nach der vollständigen Härtung Klarlackierungen (C) einer Trockenschichtdicke von 40 bis 45 µm resultierten. Der Klarlack wurde nach fünfminütigem Ablüften bei Raumtemperatur zehn Minuten bei 80 °C getrocknet, mit UV-Strahlung einer Dosis von 1,5 x10⁴ Jm⁻² bestrahlt und abschließend während 30 Minuten bei 90 °C gehärtet.

Die Haftungseigenschaften der farbgebenden Mehrschichtlackierungen der Beispiele und Vergleichsversuche wurden mit Hilfe des Dampfstrahltests geprüft. Dazu wurde jeweils ein Kreuz in die Mehrschichtlackierungen geritzt. Die geritzten Stellen wurden mit einem Wasserstrahl besprüht (Gerät der Firma Walter Typ LTA2; Druck: 80 bar; Wassertemperatur: 80 °C; Abstand Düsenspitze/Prüftafel: 12 cm; Belastungsdauer: 30 Sekunden; Geräteeinstellung: F 2).

Der Grad der Abplatzungen wurde bei den Beispielen 5 und 6 sowie bei den Vergleichsversuchen V 5 und V 6 (Substrat:Bonderbleche) visuell beurteilt und wie folgt benotet:

| **Note** | **Grad der Abplatzungen** |
|---|---|
| 0 | keine |
| 1 | geringe |
| 2 | gering bis mittel |
| 3 | mittel |
| 4 | stark |
| 5 | vollständig |

Bei den Beispielen 1 und 2 sowie den Vergleichsversuchen V 1 und V 2 (Substrat: IMC) und den Beispielen 3 und 4 sowie den Vergleichsversuchen V 3 und V 4 (Substrat: SMC) wurde beurteilt, ob die Mehrschichtlackierungen keine Abplatzungen erlitten hatten (Note i.O.) und ob Substratbruch eingetreten war.

Die Mehrschichtlackierungen der Beispiele 1 bis 4 und der Vergleichsversuche V 1 bis V 4 wurden der Gitterschnittprüfung nach DIN ISO 2409: 1994-10 unterworfen. Der Schneidenabstand betrug 1,5 mm.

Die Mehrschichtlackierungen der Beispiele 5 und 6 und der Vergleichsversuche V 5 und V 6 wurden ebenfalls der Gitterschnittprüfung nach DIN ISO 2409: 1994-10 unterworfen. Der Schneidenabstand betrug 2 mm.

Außerdem wurden die Mehrschichtlackierungen der Beispiele 5 und 6 und der Vergleichsversuche V 5 und V 6 noch der Multisteinschlagprüfung nach VDA (2*500 g Stahlschrot) unterworfen. Die resultierenden Abplatzungen wurden beurteilt und benotet (Note 1: keine Abplatzungen, bis Note 5: sehr starke Aoplatzungen).

Die durch die Multisteinschlagprüfung belasteten Mehrschichtlackierungen der Beispiele 5 und 6 und der Vergleichsversuche V 5 und V 6 wurden noch dem Dampfstrahltest unterzogen. Die hieraus resultierende Beschädigung wurde, wie oben angegeben, visuell beurteilt und benotet.

Die Tabelle 2 gibt einen Überblick über die erhaltenen Versuchsergebnisse. Die Versuchsergebnissen untermauern, dass mit Hilfe des erfindungsgemäßen Verfahrens Mehrschichtlackierungen erhalten wurden, die den Mehrschichtlackierungen, die nach einem üblichen und bekannten Verfahren hergestellt wurden, völlig ebenbürtig waren - und dies obwohl bei dem erfindungsgemäßen Verfahren ein thermischer Härtungsschritt weniger angewandt werden musste als bei dem herkömmlichen Verfahren. Dies bedeutet bei der Übertragung des erfindungsgemäßen Verfahrens in die betriebliche Praxis eine starke Verkürzung der Prozesszeiten und eine Einsparung von Energie und Kapital.

**Tabelle 2: Versuchsergebnisse**

| **Bsp. und Vgl.vers. Dampfstrahl** | **Test: Dampfstrahl** | **Gitterschnitt** | | **Multisteinschlag** | **+** |
|---|---|---|---|---|---|
| | | **1,5 mm** | **2 mm** | | |
| V 1 | i.O. | 0 | - | - | - |
| | | | | | |
| V 2 | i.O. | 0 | - | - | - |
| | | | | | |
| 1 | i.O. | 0 | - | - | - |
| | | | | | |
| 2 | i.O. | 0 | - | - | - |
| | | | | | |
| V 3 | i.O. | 0 | - | - | - |
| | (Substratbruch) | | | | |
| | | | | | |
| V 4 | i.O. | 0 | - | - | - |
| | (Substratbruch) | | | | |
| 3 | i.O. | 0 | - | - | - |
| | (Substratbruch) | | | | |
| | | | | | |
| 4 | i.O. | 0 | - | - | - |
| | (Substratbruch) | | | | |
| | | | | | |
| V 5 | - | - | 0 | 3 | 4 |
| | | | | | |
| V 6 | - | - | 0 | 2,5 | 3,5 |
| | | | | | |
| 5 | - | - | 0 | 3 | 3,5 |
| | | | | | |
| 6 | - | - | 0 | 3 | 3,5 |

Auch in ihren optischen Eigenschaften (Appearance) waren die Mehrschichtlackierungen ebenbürtig und von bester Automobilqualität.

## Patentansprüche

1. Verfahren zur Herstellung von farb- und/oder effektgebenden Mehrschichtlackierungen, die
(A) mindestens einen Primer,
(B) mindestens eine farb- und/oder effektgebende Basislackierung und
(C) mindestens eine Klarlackierung
umfassen, **dadurch gekennzeichnet, dass** man
(I) mindestens einen thermisch und mit aktinischer Strahlung härtbaren, pigmentierten oder unpigmentierten Primer (A) auf ein Substrat appliziert, wodurch mindestens eine Primerschicht (A) resultiert,
(II) die Primerschicht(en) (A) mit aktinischer Strahlung bestrahlt, wodurch mindestens eine partiell gehärtete Primerschicht (A), die noch thermisch gehärtet werden kann, resultiert,
(III) mindestens einen thermisch härtbaren und/oder mindestens einen thermisch und mit aktinischer Strahlung härtbaren, pigmentierten Beschichtungsstoff (B) auf die äußere Oberfläche der partiell gehärteten Primerschicht(en) (A) appliziert, wodurch mindestens eine pigmentierte Schicht (B), die noch thermisch oder thermisch und mit aktinischer Strahlung gehärtet werden kann, resultiert,
(IV) die thermisch und mit aktinischer Strahlung härtbare(n) Schicht(en) (B) mit aktinischer Strahlung bestrahlt, wodurch mindestens eine partiell gehärtete Schicht (B), die noch thermisch gehärtet werden kann, resultiert,
(V) mindestens einen mit aktinischer Strahlung härtbaren und/oder mindestens einen thermisch und mit aktinischer Strahlung härtbaren Klarlack (C) auf die äußere Oberfläche der Schicht(en) (B) appliziert, wodurch mindestens eine mit aktinischer Strahlung härtbare und/oder mindestens eine thermisch und mit aktinischer Strahlung härtbare Klarlackschicht (C) resultiert oder resultieren,
(VI) die mit aktinischer Strahlung härtbaren und/oder thermisch und mit aktinischer Strahlung härtbare(n) Klarlackschicht(en) (C) mit aktinischer Strahlung bestrahlt, wodurch mindestens eine mit aktinischer Strahlung gehärtete Klarlackierung und/oder mindestens eine partiell gehärtete Klarlackschicht (C), die noch thermisch gehärtet werden kann, resultiert oder resultieren, und
(VII) die Primerschicht(en) (A), die pigmentierten Schicht(en) (B) und die noch thermisch härtbare(n) Klarlackschicht(en) (C) gemeinsam thermisch härtet.

2. Verfahren nach Anspruch 1, **dadurch gekennzeichnet, dass** als Substrate Kraftfahrzeugkarosserien und Anbauteile hiervon verwendet werden.

3. Verfahren nach Anspruch 2, **dadurch gekennzeichnet, dass** die Anbauteile SMC, BMC, IMC und RIMC sind.

4. Verfahren nach einem der Ansprüche 1 bis 3, **dadurch gekennzeichnet, dass** der Primer (A)
(a1) mindestens einen Bestandteil mit
(a11) im statistischen Mittel mindestens zwei funktionellen Gruppen pro Molekül, die mindestens eine mit aktinischer Strahlung aktivierbare Bindung enthalten, die der Vernetzung mit aktinischer Strahlung dient, und gegebenenfalls
(a12) mindestens einer isocyanatreaktiven Gruppe,
(a2) mindestens einen thermisch härtbaren Bestandteil mit mindestens zwei isocyanatreaktiven Gruppen
und
(a3) mindestens ein Polyisocyanat
enthält.

5. Verfahren nach Anspruch 4, **dadurch gekennzeichnet, daß** die isocyanatreaktiven Gruppen (a12) aus der Gruppe, bestehend aus Hydroxyl-, Thiol-, primären und sekundäre Aminogruppen und Iminogruppen, ausgewählt werden.

6. Verfahren nach Anspruch 4 oder 5, **dadurch gekennzeichnet, daß** die funktionellen Gruppen (a11) aus der Gruppe, bestehend aus Kohlenstoff-Wasserstoff-Einzelbindungen oder Kohlenstoff-Kohlenstoff-, Kohlenstöff-Sauerstoff-, Kohlenstoff-Stickstoff-, Kohlenstoff-Phosphor- oder Kohlenstoff-Silizium-Einzelbindungen oder -Doppelbindungen, ausgewählt verwendet werden.

7. Verfahren nach Anspruch 6, **dadurch gekennzeichnet, daß** die funktionellen Gruppen (a11) Kohlenstoff-Kohlenstoff-Dopppelbindungen ("Doppelbindungen") sind.

8. Verfahren nach Anspruch 7, **dadurch gekennzeichnet, daß** die Doppelbindungen in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vorliegen.

9. Verfahren nach Anspruch 8, **dadurch gekennzeichnet, daß** die Doppelbindungen in Acrylatgruppen vorliegen.

10. Verfahren nach einem der Ansprüche 3 bis 9, **dadurch gekennzeichnet, daß** die funktionellen Gruppen (a12) Hydroxylgruppen sind.

11. Verfahren nach einem der Ansprüche 3 bis 10, **dadurch gekennzeichnet, daß** die Bestandteile (a2) aus der Gruppe, bestehend aus linearen oder verzweigten, blockartig, kammartig oder statistisch aufgebauten Oligomeren und Polymeren, ausgewählt werden.

12. Verfahren nach Anspruch 11, **dadurch gekennzeichnet, daß** die Oligomeren und Polymeren (a2) aus der Gruppe, bestehend aus (Meth)Acrylat(co)polymerisaten, Polyestern, Alkyden, Aminoplastharzen, Polyurethanen, Polylactonen, Polycarbonaten, Polyethern, Epoxidharz-Amin-Addukten, (Meth)Acrylatdiolen, partiell verseiften Polyvinylestern und Polyharnstoffen, ausgewählt werden.

13. Verfahren nach einem der Ansprüche 4 bis 12, **dadurch gekennzeichnet, dass** in dem Primer (A) das Verhältnis von Isocyanatgruppen zur Summe der isocyanatreaktiven funktionellen Gruppen < 1,3 ist.

14. Verfahren nach einem der Ansprüche 4 bis 13, **dadurch gekennzeichnet, dass** der thermisch härtbare Bestandteil (a2) eine Uneinheitlichkeit des Molekulargewichts (massenmittleres Molekulargewicht Mn/zahlenmittleres Molekulargewicht Mn) von < 4 hat.

15. Verfahren nach einem der Ansprüche 4 bis 14, **dadurch gekennzeichnet, dass** in dem Dual-Cure-Primer (A) das Verhältnis von Festkörpergehalt an mit aktinischer Strahlung härtbaren Bestandteilen (UV) zu Festkörpergehalt an thermisch härtbaren Bestandteilen (TH) bei (UV)/(TH) = 0,2 bis 0,6 liegt.

16. Verfahren nach einem der Ansprüche 4 bis 12, **dadurch gekennzeichnet, dass** der thermisch härtbare Bestandteil (a2), bezogen auf seine Gesamtmenge, einen Gehalt an aromatischen Struktureinheiten < 5, Gew.% aufweist.

## Claims

1. Process for producing multicoat color and/or effect paint systems comprising
(A) at least one primer,
(B) at least one color and/or effect basecoat, and
(C) at least one clearcoat,
**characterized in that**
(I) at least one pigmented or unpigmented primer (A) curable thermally and with actinic radiation is applied to a substrate to give at least one primer film (A),
(II) the primer film(s) (A) is/are exposed to actinic radiation to give at least one partially cured primer film (A) which can still be thermally cured,
(III) at least one pigmented coating material (B) curable thermally and/or at least one pigmented coating material (B) curable thermally and with actinic radiation is/are applied to the outer surface of the partially cured primer film(s) (A) to give at least one pigmented film (B) which can still be cured thermally or both thermally and with actinic radiation,
(IV) the film(s) (B) curable thermally and with actinic radiation is/are exposed to actinic radiation to give at least one partially cured film (B) which can still be thermally cured,
(V) at least one clearcoat material (C) curable with actinic radiation and/or at least one clearcoat material (C) curable thermally and with actinic radiation is/are applied to the outer surface of the film(s) (B) to give at least one clearcoat film (C) curable with actinic radiation and/or at least one clearcoat film (C) curable thermally and with actinic radiation,
(VI) the clearcoat film(s) (C) curable with actinic radiation and/or thermally and with actinic radiation is/are exposed to actinic radiation to give at least one clearcoat (C) cured with actinic radiation and/or at least one partially cured clearcoat film (C) which can still be thermally cured, and
(VII) the primer film(s) (A), the pigmented film(s) (B), and the still thermally curable clearcoat film(s) (C) are subjected to joint thermal curing.

2. Process according to Claim 1, **characterized in that** motor vehicle bodies and mounted components thereof are used as substrates.

3. Process according to Claim 2, **characterized in that** the mounted components are SMC, BMC, IMC or RIMC.

4. Process according to any of Claims 1 to 3, **characterized in that** the primer (A) comprises
(a1) at least one constituent containing
(a11) on average per molecule at least two functional groups containing at least one bond which can be activated with actinic radiation and which serves for crosslinking with actinic radiation, and if desired
(a12) at least one isocyanate-reactive group,
(a2) at least one thermally curable constituent containing at least two isocyanate-reactive groups,
and
(a3) at least one polyisocyanate.

5. Process according to Claim 4, **characterized in that** the isocyanate-reactive groups (a12) are selected from the group consisting of hydroxyl, thiol, primary and secondary amino groups, and imino groups.

6. Process according to Claim 4 or 5, **characterized in that** the functional groups (a11) are selected from the group consisting of carbon-hydrogen single bonds or carbon-carbon, carbon-oxygen, carbon-nitrogen, carbon-phosphorus or carbon-silicon single bonds or double bonds.

7. Process according to Claim 6, **characterized in that** the functional groups (a11) are carbon-carbon double bonds ("double bonds").

8. Process according to Claim 7, **characterized in that** the double bonds are present in (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups, ethenylarylene ether, dicyclopentadienyl ether, norbornenyl ether, isoprenyl ether, isopropenyl ether, allyl ether or butenyl ether groups, or ethenylarylene ester, dicyclopentadienyl ester, norbornenyl ester, isoprenyl ester, isopropenyl ester, allyl ester or butenyl ester groups.

9. Process according to Claim 8, **characterized in that** the double bonds are present in acrylate groups.

10. Process according to any of Claims 3 to 9, **characterized in that** the functional groups (a12) are hydroxyl groups.

11. Process according to any of Claims 3 to 10, **characterized in that** the constituents (a2) are selected from the group consisting of linear or branched, block, comb or random oligomers and polymers.

12. Process according to Claim 11, **characterized in that** the oligomers and polymers (a2) are selected from the group consisting of (meth)acrylate (co)polymers, polyesters, alkyds, amino resins, polyurethanes, polylactones, polycarbonates, polyethers, epoxy resin-amine adducts, (meth)acrylate diols, partially hydrolyzed polyvinyl esters, and polyureas.

13. Process according to any of Claims 4 to 12, **characterized in that** the ratio of isocyanate groups to the sum of the isocyanate-reactive functional groups in the primer (A) is < 1.3.

14. Process according to any of Claims 4 to 13, **characterized in that** the thermally curable constituent (a2) has a molecular weight polydispersity (mass-average molecular weight Mm/number-average molecular weight Mn) of < 4.

15. Process according to any of Claims 4 to 14, **characterized in that** in the dual-cure primer (A) the ratio of solids content of constituents curable with actinic radiation (UV) to solids content of thermally curable constituents (TH), viz. (UV)/(TH), is from 0.2 to 0.6.

16. Process according to any of Claims 4 to 12, **characterized in that** the thermally curable constituent (a2), based on its overall amount, has an aromatic structural unit content of < 5% by weight.

## Revendications

1. Procédé pour la production de laquages à plusieurs couches conférant une couleur et/ou un effet, qui comprennent
(A) au moins un apprêt,
(B) au moins un laquage de base conférant une couleur et/ou un effet et
(C) au moins un laquage clair
**caractérisé en ce qu'**on
(I) applique sur un substrat au moins un apprêt (A) pigmenté ou non pigmenté, durcissable thermiquement et par un rayonnement actinique suite à quoi on obtient au moins une couche d'apprêt (A),
(II) irradie la(les) couche(s) d'apprêt (A) avec un rayonnement actinique, suite à quoi on obtient au moins une couche d'apprêt (A) partiellement durcie, qui peut encore être durcie thermiquement,
(III) applique au moins une substance de revêtement (B) pigmentée, durcissable thermiquement et/ou au moins une substance de revêtement (B) pigmentée durcissable thermiquement et par un rayonnement actinique sur la surface extérieure de la(les) couche(s) d'apprêt (A) partiellement durcie(s), suite à quoi on obtient au moins une couche pigmentée (B) qui peut encore être durcie thermiquement ou thermiquement et par un rayonnement actinique,
(IV) irradie la(les) couche(s) (B) durcissable(s) thermiquement et par un rayonnement actinique avec un rayonnement actinique, suite à quoi on obtient au moins une couche partiellement durcie (B), qui peut encore être durcie thermiquement,
(V) applique au moins une laque claire (C) durcissable par un rayonnement actinique et/ou au moins une laque claire (C) durcissable thermiquement et par un rayonnement actinique sur la surface extérieure de la(des) couche(s) (B), suite à quoi on obtient au moins une couche de laque claire (C) durcissable par un rayonnement actinique et/ou au moins une couche de laque claire (C) durcissable thermiquement et par un rayonnement actinique,
(VI) irradie les couches de laque claire (C) durcissables par un rayonnement actinique et/ou la/les couche(s) de laque claire (C) durcissable(s) thermiquement et par un rayonnement actinique, avec un rayonnement actinique, suite à quoi on obtient au moins un laquage clair durci par un rayonnement actinique et/ou au moins une couche de laque claire (C) partiellement durcie, qui peut encore être durcie thermiquement, et
(VII) durcit thermiquement, ensemble, la(les) couche(s) d'apprêt (A), la(les) couche(s) pigmentée(s) (B) et la(les) couche(s) de laque claire (C) qui peu(ven)t encore être durcie(s) thermiquement.

2. Procédé selon la revendication 1, **caractérisé en ce qu'**on utilise comme substrats des carrosseries de véhicules et des éléments de celles-ci.

3. Procédé selon la revendication 2, **caractérisé en ce que** les éléments sont des SMC (composites moulés en feuille), des BMC (composites moulés en vrac), des IMC (composites moulés par injection) et des RIMC (composites réactifs moulés par injection).

4. Procédé selon l'une quelconque des revendications 1 à 3, **caractérisé en ce que** l'apprêt (A) contient
(a1) au moins un constituant présentant
(a11) en moyenne statistique au moins deux groupes fonctionnels par molécule, qui contiennent au moins une liaison activable par un rayonnement actinique, qui sert à la réticulation avec un rayonnement actinique et, le cas échéant,
(a12) au moins un groupe réactif avec isocyanate,
(a2) au moins un constituant durcissable thermiquement présentant au moins deux groupes réactifs avec isocyanate
et
(a3) au moins un polyisocyanate.

5. Procédé selon la revendication 4, **caractérisé en ce que** les groupes réactifs avec isocyanate (a12) sont choisis dans le groupe constitué par les groupes hydroxyle, thiol, amino primaires et secondaires et le groupe imino.

6. Procédé selon la revendication 4 ou 5, **caractérisé en ce qu'**on utilise les groupes fonctionnels (a11) choisis dans le groupe constitué par les simples liaisons carbone-hydrogène ou les simples ou doubles liaisons carbone-carbone, carbone-oxygène, carbone-azote, carbone-phosphore ou carbone-silicium.

7. Procédé selon la revendication 6, **caractérisé en ce que** les groupes fonctionnels (a11) sont des doubles liaisons carbone-carbone ("doubles liaisons").

8. Procédé selon la revendication 7, **caractérisé en ce que** les doubles liaisons se trouvent dans des groupes (méth)acrylate, éthacrylate, crotonate, cinnamate, vinyléther, ester de vinyle, éthénylarylène, dicyclopentadiényle, norbornényle, isoprényle, isopropényle, allyle ou butényle ; éthénylarylénéther, dicyclopentadiényléther, norbornényléther, isoprényléther, isopropényléther, allyléther ou butényléther ou ester d'éthénylarylène, de dicyclopentadiényle, de norbornényle, d'isoprényle, d'isopropényle, d'allyle ou de butényle.

9. Procédé selon la revendication 8, **caractérisé en ce que** les doubles liaisons se trouvent dans des groupes acrylate.

10. Procédé selon l'une quelconque des revendications 3 à 9, **caractérisé en ce que** les groupes fonctionnels (a12) sont les groupes hydroxyle.

11. Procédé selon l'une quelconque des revendications 3 à 10, **caractérisé en ce que** les constituants (a2) sont choisis dans le groupe constitué par les oligomères et polymères linéaires ou ramifiés, à structure en blocs, en peigne ou statistique.

12. Procédé selon la revendication 11, **caractérisé en ce que** les oligomères et les polymères (a2) sont choisis dans le groupe constitué par les (co)polymères de (méth)acrylate, les polyesters, les alkydes, les résines aminoplastes, les polyuréthanes, les polylactones, les polycarbonates, les polyéthers, les produits d'addition de résine époxyde-amine, les (méth)acrylatediols, les poly(esters de vinyle) partiellement saponifiés et les polyurées.

13. Procédé selon l'une quelconque des revendications 4 à 12, **caractérisé en ce que** dans l'apprêt (A) le rapport des groupes isocyanate à la somme des groupes fonctionnels réactifs avec isocyanate est < 1,3.

14. Procédé selon l'une quelconque des revendications 4 à 13, **caractérisé en ce que** le constituant durcissable thermiquement (a2) présente une hétérogénéité du poids moléculaire (poids moléculaire massique moyen Mm/poids moléculaire numérique moyen Mn) < 4.

15. Procédé selon l'une quelconque des revendications 4 à 14, **caractérisé en ce que** dans l'apprêt Dual-Cure (A) le rapport de la teneur en solides de constituants durcissables par un rayonnement actinique (UV) à la teneur en solides de constituants thermiquement durcissables (TH) se situe à (UV)/(TH) = 0,2 à 0,6.

16. Procédé selon l'une quelconque des revendications 4 à 12, **caractérisé en ce que** le constituant durcissable thermiquement (a2), par rapport à sa quantité totale, présente une teneur en unités de structure aromatiques < 5% en poids.
